(19) Europäisches Patentamt
European Patent Office
Office européen des brevets

(11) EP 2 494 643 B1

(12) FASCICULE DE BREVET EUROPEEN

(45) Date de publication et mention de la délivrance du brevet:
18.03.2015 Bulletin 2015/12

(21) Numéro de dépôt: 10768977.0

(22) Date de dépôt: 27.10.2010

(51) Int Cl.:
H01M 8/04 (2006.01)          H01M 8/10 (2006.01)

(86) Numéro de dépôt international:
PCT/EP2010/066261

(87) Numéro de publication internationale:
WO 2011/051340 (05.05.2011 Gazette 2011/18)

(54) **PROCEDURE DE DETECTION DE L'ETAT D'ETANCHEITE D'UNE PILE A COMBUSTIBLE.**

VERFAHREN ZUR ERKENNUNG DES VERSIEGELTEN ZUSTANDES EINER BRENNSTOFFZELLE

METHOD FOR DETECTING THE SEALED STATE OF A FUEL CELL

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 30.10.2009 FR 0957645

(43) Date de publication de la demande:
05.09.2012 Bulletin 2012/36

(73) Titulaires:
• COMPAGNIE GENERALE DES ETABLISSEMENTS MICHELIN
63000 Clermont-Ferrand (FR)
• MICHELIN Recherche et Technique S.A.
1763 Granges-Paccot (CH)

(72) Inventeur: PAGANELLI, Gino
1741 Cottens (CH)

(74) Mandataire: Roussy, Delphine
Manufacture Française des Pneumatiques Michelin
23, place des Carmes-Déchaux
DGD/PI - F35 - Ladoux
63040 Clermont-Ferrand Cedex 9 (FR)

(56) Documents cités:
WO-A1-2008/104865          WO-A1-2009/041271
WO-A2-03/061046            JP-A- 2009 146 651
US-A1- 2009 220 832

**Description**

*DOMAINE DE L'INVENTION*

La présente invention se rapporte aux piles à combustibles, en particulier mais non exclusivement aux piles à combustible du type à électrolyte sous la forme d'une membrane polymère (c'est à dire de type PEFC pour Polymer Electrolyte Fuel Cell).

*ETAT DE LA TECHNIQUE*

On sait que les piles à combustibles permettent la production directe d'énergie électrique par une réaction électrochimique d'oxydoréduction à partir d'hydrogène (le carburant) et d'oxygène (le comburant), sans passer par une conversion en énergie mécanique. Cette technologie semble prometteuse notamment pour des applications automobiles. Une pile à combustible comporte en général l'association en série d'éléments unitaires qui, chacun, sont constitués essentiellement d'une anode et d'une cathode séparées par une membrane polymère permettant le passage d'ions de l'anode à la cathode.

Il est très important d'avoir en permanence une évaluation précise de l'étanchéité de la pile à combustible, c'est-à-dire de l'étanchéité du circuit de gaz à l'anode (circuit du gaz carburant) et l'étanchéité du circuit de gaz comburant (circuit de gaz à la cathode). En effet, une fuite de gaz va inévitablement perturber le fonctionnement de la pile à combustible et son environnement, en particulier s'il s'agit d'une fuite de gaz carburant. Cela peut avoir pour conséquence une perte de puissance de la pile à combustible, une diminution de rendement, voire un vieillissement prématuré de celle-ci, voir même une remise en cause des conditions opératoires assurant un fonctionnement en sécurité.

La demande de brevet WO 2003/061046 décrit une procédure d'extinction d'une pile à combustible à membrane électrolyte polymère fonctionnant à l'air comme gaz comburant. La procédure décrite s'attache à maintenir la différence de pression entre l'anode à la cathode en dessous d'un niveau acceptable. Pour cela l'alimentation en air est maintenue pendant l'extinction et la pression d'air est asservie pour suivre la descente en pression coté hydrogène. Cependant, le maintien de l'alimentation en air risque de conduire à une pénurie d'hydrogène ce qui est assez préoccupant pour la survie de la pile. Par ailleurs, ce document n'enseigne aucun moyen pour observer l'état d'étanchéité d'une pile à combustible

Le document JP2009146651 A décrit, par ailleurs, une procédure de détection d'une fuite de gaz carburant dans une pile à combustible.

L'objectif de la présente invention est de pouvoir observer l'état d'étanchéité de la pile à combustible vis à vis de l'atmosphère, en particulier après chaque extinction, pour le suivi et le diagnostic d'une pile à combustible et cela sans qu'il soit nécessaire d'ajouter du matériel seulement pour assurer une fonction de surveillance, c'est-à-dire du matériel qui n'est d'aucune utilité pour le fonctionnement normal de la pile à combustible.

*BREVE DESCRIPTION DE L'INVENTION*

L'invention propose une procédure de détection de l'état d'une pile à combustible, telle que décrit dans les revendications.

De préférence, pour la mise en oeuvre de l'invention, la pile à combustible comporte à la fois une alimentation en oxygène pressurisé provenant d'un réservoir de stockage pour l'oxygène et un dispositif de remplissage en air atmosphérique pressurisé et un circuit de recyclage branché à la sortie du circuit cathodique de la pile à combustible.

Dans la suite de la description, on illustre l'invention en considérant une pile à combustible alimentée en oxygène pur comme gaz comburant. Cet aspect cependant n'est pas limitatif, l'invention pouvant aussi s'appliquer aux piles à combustible alimentées en air ambiant. Le mode de réalisation décrit (alimentation en oxygène pur) favorise la compacité de la pile à puissance donnée, ce qui constitue un mode de réalisation favorable pour les applications aux véhicules de transport, en particulier les véhicules automobiles.

Ce cas d'application conduit en pratique à dimensionner une pile à combustible qui aura sensiblement le même volume interne pour le circuit d'alimentation en gaz carburant côté anode des cellules électrochimiques et pour le circuit d'alimentation en gaz comburant côté cathode des cellules électrochimiques. Si ce n'est pas le cas, l'homme du métier saura apporter les coefficients d'adaptation pertinents pour surveiller en commun l'étanchéité des deux circuits de gaz d'une pile à combustible vis à vis de l'atmosphère.

De préférence, la procédure de détection de l'état d'étanchéité d'une pile à combustible telle qu'elle a été expliquée ci-dessus est précédée d'une procédure d'arrêt de ladite pile à combustible, ladite pile à combustible délivrant une tension électrique sur une ligne électrique de puissance (10), la procédure d'arrêt comprenant les actions suivantes :

- (i) coupure de l'alimentation en gaz carburant et en gaz comburant, et
- (ii) maintien d'un prélèvement de courant tant qu'un révélateur approprié indique que le gaz comburant dans le système d'alimentation en gaz comburant n'est pas suffisamment consommé ;
- (iii) injection de gaz enrichi en azote dans le système d'alimentation en gaz comburant.

Les actions (i), (ii) et (iii) pourraient être toutes concomitantes. Pour une meilleure compréhension, dans la description qui suit, les actions (ii) et (iii) sont des étapes successives, les deux actions (i) et (ii) étant concomitantes. Il est utile de prévoir en outre, après l'action (iii), une étape d'aspiration de gaz carburant, comme cela est également montré dans la description de la procédure d'arrêt illustrant l'invention.

Grâce à la procédure d'arrêt proposée ci-dessus, l'hydrogène ne diffuse à la cathode que très lentement, à travers la membrane polymère échangeuse d'ions, et au terme de l'extinction, c'est-à-dire après que tout l'oxygène aura été consommé et que le circuit à la cathode aura été rempli d'azote. L'oxygène et l'hydrogène ne cohabitent donc jamais en quantité significative. L'alimentation d'hydrogène est interrompue dès le début de la procédure simultanément ou quasi simultanément à la coupure de l'alimentation en gaz comburant; si l'action d'interruption de l'alimentation en gaz carburant pourrait être quelque peu différée par rapport à l'action d'interruption de l'alimentation en gaz comburant, elle ne peut l'être significativement. La suite ne s'attache à décrire que le cas où l'alimentation en gaz comburant et en gaz carburant sont interrompues simultanément, ce qui est plus simple à commander et donne des résultats tout à fait satisfaisants. L'intégralité de l'hydrogène résiduel à l'anode est parcimonieusement utilisée pour garantir le mélange H2/N2 souhaité.

Notons que la procédure d'arrêt proposée ci-dessus s'étend à une pile à combustible dans laquelle la chambre d'accumulation additionnelle de gaz carburant pourrait être disposée à n'importe quel endroit du circuit d'alimentation en gaz carburant, c'est-à-dire à n'importe quel endroit entre la vanne de coupure et la pile à combustible, même sur le circuit de recyclage, ou sur le circuit entre le séparateur d'eau et l'éjecteur. Cependant il est intéressant de la placer à un endroit du circuit où la pression est plus élevée afin d'en réduire le volume, comme spécifié dans la description de la pile à combustible ci-dessus.

Dans tous les cas, en ce qui concerne l'électrolyte, l'invention s'applique aux piles à combustible du type à électrolyte sous la forme d'une membrane polymère (c'est à dire de type PEFC pour Polymer Electrolyte Fuel Cell). Le générateur d'électricité et la procédure d'arrêt décrits ci-dessous s'avèrent particulièrement aptes à être installés et mis en oeuvre dans un véhicule automobile.

*BREVE DESCRIPTION DES FIGURES*

La suite de la description permet de bien faire comprendre tous les aspects de l'invention au moyen des dessins joints dans lesquels :

- la figure 1 est un schéma d'un générateur d'électricité utilisant une pile à combustible alimentée en oxygène pur ;
- la figure 2 montre l'évolution de différents paramètres au cours de l'extinction d'une pile à combustible ;

- La figure 3 montre l'évolution des pressions après une extinction et illustre le principe de mesure de l'état d'étanchéité de la pile.

*DESCRIPTION DE MEILLEURS MODES DE REALISATION DE L'INVENTION*

Pour des raisons de sécurité, les piles à combustible sont en général équipées d'une vanne de coupure en H2 qui reste fermée lors des arrêts. Dans ce cas, il n'est pas possible de prélever l'H2 dans le réservoir pendant la procédure d'extinction. La pile à combustible doit donc fonctionner avec uniquement l'hydrogène résiduel dans ses canaux, les tubulures, les réservoirs internes de déshumidification et autres éléments de la ligne d'alimentation allant de la vanne de sécurité jusque la pile à combustible proprement dite, ces éléments étant désignés dans la suite en général comme le circuit d'alimentation de la pile à combustible.

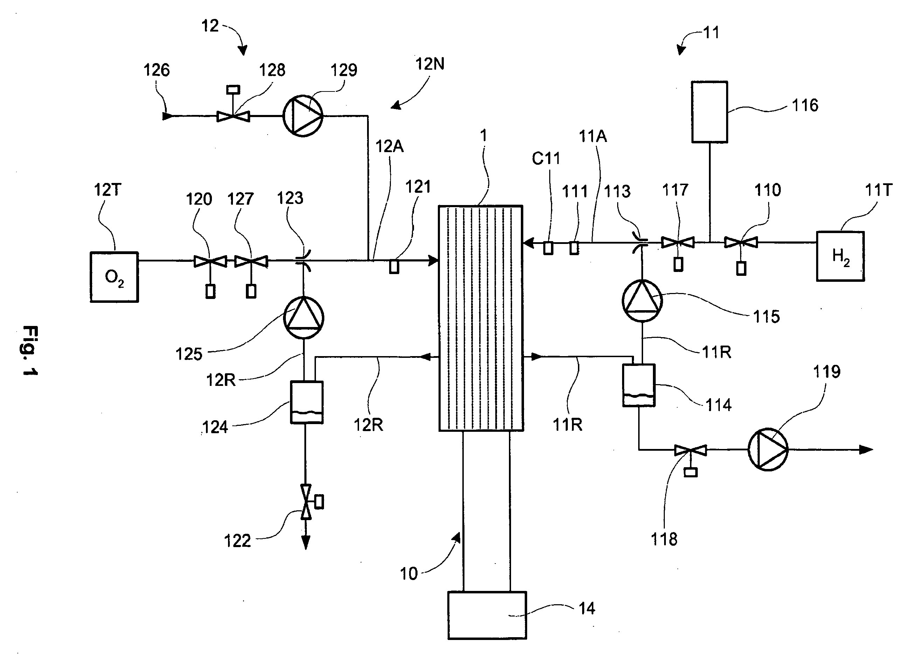

A la figure 1, on voit une pile à combustible 1 du type à électrolyte sous la forme d'une membrane polymère (c'est à dire de type PEFC pour Polymer Electrolyte Fuel Cell ou PEM pour Proton Exchange Membrane). La pile à combustible 1 est approvisionnée par deux gaz, à savoir le carburant (l'hydrogène stocké ou fabriqué à bord du véhicule) et le comburant (l'oxygène pur) qui alimentent les électrodes des cellules électrochimiques. Une charge électrique 14 est branchée à la pile à combustible 1 par une ligne électrique 10. Pour simplifier, la figure 1 ne représente que les éléments des circuits de gaz utiles à la compréhension de l'invention.

*Description du circuit anodique :*

L'installation comporte un circuit d'alimentation 11 en gaz carburant coté anodes. On voit un réservoir 11T d'hydrogène pur $H_2$ relié à l'entrée du circuit anodique de la pile à combustible 1 au moyen d'une canalisation d'alimentation qui passe par une vanne de coupure 110, puis par un éjecteur 113, puis par un canal d'alimentation 11A en gaz carburant aboutissant aux cathodes. Une sonde de pression 111 est installée sur canal d'alimentation 11A juste avant l'entrée dans la pile à combustible 1. Fait partie du circuit d'alimentation 11 en hydrogène (le carburant) un circuit de recyclage 11R de l'hydrogène non consommé par la pile à combustible, branché à la sortie du circuit anodique de la pile à combustible 1. Un séparateur d'eau 114 est installé sur le circuit de recyclage 11R. L'éjecteur 113 ainsi qu'une pompe de re-circulation 115 assurent le recyclage de l'hydrogène non consommé et le mélange à de l'hydrogène frais en provenance du réservoir.

On voit aussi une chambre d'accumulation additionnelle de gaz carburant 116 disposée sur la tuyauterie du circuit d'alimentation 11 en gaz carburant, entre la vanne de coupure 110 et une vanne de régulation de pression 117. La chambre d'accumulation additionnelle est, dans ce mode préféré de réalisation, placée là où la pression est la plus élevée dans le circuit d'alimentation, de façon à en amoindrir le volume, ou à volume identique, de façon à stoker une plus grande quantité d'hydrogène. Notons que la chambre d'accumulation additionnelle de gaz carburant 116 pourrait être disposée à n'importe quel endroit du circuit d'alimentation en gaz carburant, c'est-à-dire à n'importe quel endroit entre la vanne de coupure 110 et la pile à combustible 1, même sur le circuit de recyclage 11 R, ou sur le circuit entre le séparateur d'eau 114 et l'éjecteur 113. Cependant il est intéressant de la placer à un endroit du circuit où la pression est plus élevée afin d'en réduire le volume.

On voit également une pompe d'aspiration 119 et une vanne de coupure 118 installés sur une canalisation aboutissant à l'atmosphère et branchée sous le séparateur d'eau 114. Le branchement à cet endroit, montré à la figure 1, permet en commandant la vanne de coupure 118 d'assurer la triple fonction d'évacuation de l'eau, de purge, et d'aspiration de l'hydrogène. Cependant, ce détail de réalisation n'est pas limitatif. Pour assurer la fonction d'aspiration de l'hydrogène plus spécifique de la présente invention, la canalisation comportant la vanne de coupure 118 pourrait être branchée en dérivation à la canalisation reliant le séparateur 114 et la pompe de re-circulation 115.

Un capteur de concentration d'hydrogène C11 peut avantageusement être introduit dans le circuit anodique de façon à surveiller la non pénurie d'hydrogène pendant la procédure d'extinction, et le cas échéant, à limiter l'introduction d'air par une pompe de gavage (voir description du circuit cathodique), ce qui peut se produire par exemple si la pression hydrogène est anormalement basse et ne garantit pas la quantité suffisante d'hydrogène pour terminer la procédure d'extinction. Un tel capteur d'hydrogène C11 est implanté comme montré à la figure 1.

*Description du circuit cathodique :*

L'installation comporte aussi un circuit d'alimentation 12 en gaz comburant coté cathodes. On voit un réservoir 12T d'oxygène pur $O_2$ relié à l'entrée du circuit cathodique de la pile à combustible 1 au moyen d'une canalisation d'alimentation qui passe par une vanne de coupure 120, puis par une vanne de régulation de pression 127, puis par un éjecteur 123, puis par un canal d'alimentation 12A en gaz comburant aboutissant aux cathodes. Une sonde de pression 121 est installée sur le canal d'alimentation 12A juste avant l'entrée dans la pile à combustible 1. Fait partie du circuit d'alimentation 11 en oxygène un circuit de recyclage 12R de l'oxygène non consommé par la pile à combustible, branché à la sortie du circuit cathodique de la pile à combustible 1. Un séparateur d'eau 124 est installé sur le circuit de recyclage 12R. L'éjecteur 123 ainsi qu'une pompe de re-circulation 125 assurent le recyclage de l'oxygène non consommé et le mélange à l'oxygène frais en provenance du réservoir.

Une vanne de purge 122 est raccordée au fond du séparateur d'eau 124 ; ainsi, elle assure la double fonction d'évacuation de l'eau et de mise à l'atmosphère le circuit d'oxygène. En variante, on pourrait raccorder cette vanne de purge 122 juste à la sortie des gaz de la pile à combustible 1, en dérivation sur la canalisation entre la pile à combustible 1 et le séparateur d'eau 124, si l'on souhaite mettre à l'atmosphère le circuit d'oxygène indépendamment d'une vidange de l'eau dans le séparateur d'eau 124. Il va sans dire que, dans tous les cas, la fonction de vidange d'eau du séparateur d'eau 124 et du séparateur d'eau 114 doit être assurée.

La pile à combustible selon l'invention comporte un dispositif de remplissage 12N en air atmosphérique pressurisé du circuit cathodique. Le dispositif de remplissage 12N comporte les éléments suivants : une canalisation débutant par un orifice d'admission d'air 126 et, installés sur ladite canalisation, une vanne de coupure 128 et une pompe de gavage 129, la canalisation aboutissant sur le circuit d'alimentation en oxygène, juste en amont de la pile à combustible 1. Soulignons que le dispositif de remplissage 12N en air atmosphérique pourrait aboutir à n'importe quel endroit de la boucle du circuit d'alimentation 12 en gaz comburant formée par le circuit de recyclage 12R et par la canalisation reliant l'éjecteur 123 à la pile à combustible 1.

*Description d'une procédure d'extinction préférée :*

La procédure décrite ci-dessous permet d'éteindre la pile à combustible de façon à garantir un stockage avec un mélange d'hydrogène et d'azote à l'intérieur, et cela, sans nécessiter de bouteille d'azote. Cette procédure est préconisée parce qu'elle se termine en laissant naturellement la pile à combustible avec un différentiel de pression suffisant par rapport la pression atmosphérique pour pouvoir réaliser la mesure d'état d'étanchéité de la pile. De plus elle favorise des conditions stables en termes de nature de gaz et de température, ce qui garantit une meilleure répétabilité de la mesure d'état d'étanchéité de la pile.

La procédure d'arrêt est composée essentiellement de 3 phases, résultats des différentes commandes qui ont été exposées :

- 1ère phase : phase de consommation de l'oxygène résiduel, qui se produit à partir de la coupure de l'alimentation en gaz carburant et en gaz comburant, et par un prélèvement de courant $I_S$ aux bornes de la pile à combustible ; on maintient ce prélèvement de courant $I_S$ tant qu'un révélateur approprié indique que le gaz comburant dans le système d'alimentation en gaz comburant n'est pas suffisamment consommé ; un révélateur approprié est par exemple la pression dans le circuit cathodique ;

- 2ème phase : phase de neutralisation, qui se produit en remplissant le circuit cathodique d'azote ; dans le mode de réalisation décrit ici, l'azote est celui de l'air atmosphérique ; on procède donc à une injection forcée d'air atmosphérique, ce qui apporte à nouveau un peu d'oxygène dont il faut contrôler la consommation ;

- 3<sup>éme</sup> phase, optionnelle, pendant laquelle, après l'arrêt total des processus électrochimiques, on retire de façon forcée un éventuel excès de gaz carburant (ici, aspiration forcée de l'hydrogène excédentaire) ; soulignons que, grâce à l'invention, cette aspiration ne se fait qu'après avoir amené la pile à combustible dans un état où l'on a pris les précautions permettant d'éviter la sous alimentation en hydrogène dont on connaît les graves inconvénients.

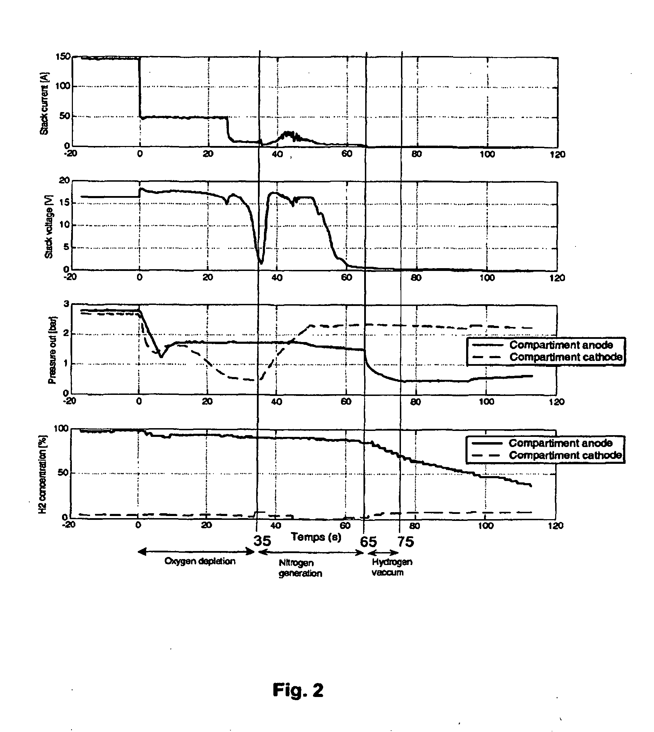

La figure 2 illustre l'enchaînement des trois phases lors d'un arrêt réellement mesuré sur une pile à combustible de 20 cellules de 300cm2 de surface active fonctionnant à l'oxygène pur. L'axe des abscisses indique le temps en secondes avec comme référence (0) l'instant où la procédure d'arrêt commence. Cette figure représente l'évolution des grandeurs suivantes en fonction du temps lors d'un arrêt avec génération d'azote :

- courbe 1, dont l'axe des ordonnées est repéré par « Stack current [A] » :

    courant prélevé sur la pile à combustible, exprimé en Ampères ;

- courbe 2, dont l'axe des ordonnées est repéré par « Stack voltage [V] » :

    tension électrique totale aux bornes de la pile à combustible, exprimée en Volts ;

- courbe 3, dont l'axe des ordonnées est repéré par « Pressure out [bar] » :

    pression régnant dans le compartiment anode (hydrogène : trait continu) et dans le compartiment cathode (oxygène : trait pointillé), exprimées en bara ;

- courbe 4, dont l'axe des ordonnées est repéré par « H2 concentration [%] » :

    concentration d'hydrogène dans le compartiment anode (hydrogène : trait continu) et dans le compartiment cathode (oxygène : trait pointillé), exprimées en pourcentage.

Lors de la première phase de l'extinction (0 à 35s, marquée « Oxygen depletion » à la figure 2), à partir du moment où l'alimentation en oxygène est coupée (en fermant la vanne de coupure 120, au même instant que la fermeture de la vanne de coupure 110 coupant l'alimentation en hydrogène), l'oxygène pur résiduel dans la pile à combustible est consommé en prélevant un courant. Comme l'indique la première courbe, ce courant est d'abord établi à 50A puis il est réduit en même temps que certaines cellules de la pile à combustible commencent à descendre en tension et s'annule finalement à 35s lorsque la tension de la pile à combustible approche de 0V. La troisième courbe indique que la pression dans le compartiment oxygène descend à moins de 500 mbara (comme cela est d'usage dans le domaine des piles à combustible, « mbara » signifie « milli bar absolu, la dernière lettre « a » signifiant « absolu »). Par contre, en dépit de la consommation liée à la production de courant, la pression d'hydrogène demeure à 1.75 bara grâce à la présence de la chambre d'accumulation additionnelle de gaz carburant 116.

Comme déjà souligné dans la partie introductive de cette demande de brevet, la procédure d'extinction selon l'invention peut aussi s'appliquer aux piles à combustible alimentées en air ambiant. Pour mettre en oeuvre la procédure d'arrêt proposée par l'invention pour une pile à combustible alimentée en air, contrairement au schéma habituel d'alimentation d'une telle pile à combustible, le circuit de gaz comburant doit comporter une boucle permettant de faire circuler l'air non consommé par la pile à combustible au moins pendant la procédure d'arrêt. Fait donc partie du circuit d'alimentation 11 en air un circuit de recyclage 12R de l'air non consommé par la pile à combustible, branché à la sortie du circuit cathodique de la pile à combustible 1, avant un retour et un branchement direct (sans éjecteur, ni séparateur d'eau inutiles dans cette configuration) sur la canalisation d'alimentation.

Revenons à la description de la procédure d'arrêt pour une pile à combustible alimentée en oxygène pur. A l'instant 35s (« 35 » sur l'axe des temps à la figure 2) la pompe de gavage 129 en air est activée pour pressuriser le circuit cathodique à une pression constante de 2.2 bara (paramètre 1) qui est atteinte à 50s. L'oxygène ainsi amené provoque la remontée en tension de la pile à combustible. Un courant est à nouveau prélevé jusqu'à ce que la tension de la pile à combustible s'annule à nouveau. Pendant ce temps, la pompe de gavage 129 est contrôlée pour maintenir une pression constante.

Au passage, rappelons que toutes les courbes détaillées ci-dessous sont relatives à une pile à combustible alimentée en oxygène pur comme comburant, le gaz enrichi en azote étant l'air atmosphérique. Cependant, soulignons d'une part que le gaz enrichi en azote pourrait être de l'azote pur et que bien entendu, dans ce cas, les courbes auraient une allure différente après l'instant « 35 secondes » puisque l'injection d'azote ne serait pas accompagnée d'un nouvel apport d'oxygène.

Revenons au cas décrit, à savoir le cas d'une pile à combustible alimentée en oxygène pur comme comburant. A mesure que le courant est consommé, l'air présent à la cathode s'appauvrit de plus en plus en oxygène pour finalement ne contenir que majoritairement de l'azote comme révélé par l'annulation de la tension aux bornes de la pile à combustible à l'instant 65s.

A ce moment (65 secondes après la coupure des alimentations en oxygène (120) et en hydrogène (110)), la pompe de gavage 129 en air est arrêtée et la pompe d'aspiration 119 d'hydrogène est activée afin d'évacuer l'excédent d'hydrogène. La pompe d'aspiration 119 est activée jusqu'à ce que la pression d'hydrogène atteigne 0.5 bara (paramètre 2). Cette pression est atteinte à l'instant 75s. La procédure est alors terminée, la pompe de gavage 129 et la pompe d'aspiration 119 sont arrêtées et les vannes de coupure 118 et 128 sont fermées.

Pendant la totalité de la procédure d'extinction, la pompe de recirculation 125 coté cathode est maintenue en fonctionnement de façon à assurer une bonne homogénéité du gaz et assurer la consommation complète de l'oxygène en évitant l'apparition de zones avec localement une plus forte concentration en oxygène. La pompe de recirculation 115 coté anode est aussi maintenue en fonctionnement de façon à éviter toute pénurie locale d'hydrogène. Pendant toute la durée de l'extinction, la pénurie d'hydrogène est évitée comme l'indique la concentration d'hydrogène représentée sur la quatrième courbe. La concentration reste supérieure à 85% dans le circuit anodique jusqu'à l'instant 65s où l'on commence l'aspiration d'hydrogène.

Dans la procédure décrite plus haut, les deux premières phases (Consommation de l'oxygène résiduel et neutralisation par injection d'azote) interviennent de façon successive. Toutefois, elles peuvent tout à fait être concomitantes. Pour une plus grande rapidité d'extinction, il est souhaitable de les faire intervenir simultanément. La dernière phase (aspiration de l'hydrogène excédentaire) n'est pas toujours indispensable. Le tampon d'hydrogène peut en effet être dimensionné pour que la procédure se termine avec la quantité d'hydrogène souhaitée comme expliqué ci-dessous.

Le volume interne du circuit d'alimentation 11 en gaz carburant est dimensionné de façon à être supérieur au volume interne du circuit d'alimentation 12 en gaz comburant et, en fonctionnement normal, la pression régnant dans le circuit d'alimentation 12 en gaz comburant et la pression régnant dans le circuit d'alimentation en gaz carburant 11 sont telles que, compte tenu du volume interne du circuit d'alimentation 12 en gaz comburant et du volume interne du circuit d'alimentation 11 en gaz carburant, le nombre de môles de gaz carburant toujours disponible au début du processus d'extinction dans le circuit d'alimentation en gaz carburant est supérieur ou égal au double du nombre de môles d'oxygène consommé dans le circuit d'alimentation en gaz comburant pendant la totalité de la procédure d'extinction, c'est à dire jusqu'à ce que le circuit cathodique soit essentiellement rempli d'azote à la pression souhaitée.

Ainsi, par une adaptation simple à calculer et à mettre en oeuvre, on peut s'assurer que le circuit d'alimentation en gaz carburant comporte toujours suffisamment de gaz pour que l'extinction de la pile à combustible résulte de l'épuisement en oxygène au circuit d'alimentation en gaz comburant.

Voyons comment procéder au calcul des volumes des circuits anodique 12 et cathodique 11. Soit $m_{o2}$ la quantité d'oxygène, exprimé par exemple en moles, devant être totalement consommée pendant la totalité de l'extinction. Il s'agit de l'oxygène résiduel dans le circuit cathode au début de l'extinction, moins la quantité qu'il est possible de purger, plus la quantité qui est introduite avec l'air introduit par la pompe de gavage 129 pour générer l'azote.

Puisque la consommation de gaz est deux fois plus importante coté hydrogène, les volumes des circuits anode et cathode doivent être dimensionnés pour garantir que :

$$m_{h2} \geq 2 \times m_{o2} + res_{h2}$$

avec $m_{h2}$ étant la quantité d'hydrogène, exprimée en moles, disponible au début de l'extinction dans le volume interne du circuit d'alimentation en gaz carburant (tuyaux, canaux, plaques bipolaires, ligne d'alimentation en aval de la vanne de coupure 110) et $res_{h2}$ étant la quantité d'hydrogène résiduel souhaité, exprimé également en moles. La quantité d'hydrogène $m_{h2}$ finalement nécessaire sera obtenue en ajustant le volume de la chambre d'accumulation additionnelle de gaz carburant 116.

Les quantités $m_{o2}$ et $m_{h2}$ sont certes liées au volume des circuits correspondants qu'il faut dimensionner mais elles dépendent aussi de la pression y régnant. Il s'agit d'une approche simplifiée puisqu'il faudrait normalement aussi tenir compte de la température du gaz et de la non-linéarité de la densité d'hydrogène en fonction de la pression. Cependant la prise en compte de la pression s'avère suffisante pour la précision recherchée. Le calcul des volumes doit être réalisé pour les conditions de pression et de température les plus défavorables pouvant être rencontrées, c'est à dire pression minimum possible dans le circuit d'hydrogène au début de l'extinction et pression maximum résiduel possible dans le circuit d'oxygène.

Toutefois en cas de variation de pression d'alimentation le déroulement de la procédure avec un excédent d'hydrogène et une aspiration finale garantit la non pénurie d'hydrogène et également une meilleure reproductibilité des conditions finales.

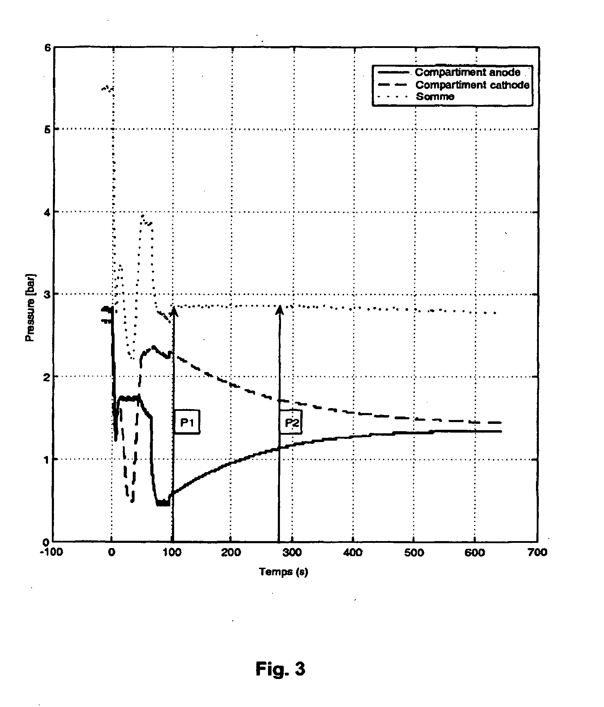

Si l'on se reporte à la figure 3, donnant l'évolution des pressions côté anode et côté cathode sur une période plus longue que la figure 2 comprenant la procédure d'extinction décrite ci-dessus et s'étendant aux quelques 10 minutes qui suivent. Au terme de la procédure d'extinction (environ 100 secondes après la coupure des alimentations en oxygène et en hydrogène), il règne dans les compartiments anode (trait continu) et cathode (trait pointillé long) une pression différente de la pression atmosphérique, dans l'exemple ci-dessus 2.2 bara à la cathode et 0.5 bara à l'anode. On voit que ces 2 pressions convergent vers une pression d'équilibre commune qui s'établie à environ 1.3 bara après 10 minutes en raison de la perméabilité des membranes séparant les deux compartiments. Par contre on observe que la somme algébrique des 2 pressions représentée par la courbe en trait pointillé court, reste sensiblement constante, à condition que la pile présente une bonne étanchéité vis-à-vis de l'atmosphère. Ainsi, si l'on procède à un contrôle dès que la pile à combustible est considérée comme éteinte, on relève une somme des pressions dans le circuit anodique et dans le circuit cathodique valant $P_1$. Par la suite, la somme des pressions d'une part dans le circuit anodique et d'autre part dans le circuit cathodique va rester sensiblement identique, signe d'une bonne étanchéité desdits circuits. Après un laps de temps supplémentaire $t_c$ de 180 secondes, on relève une somme des pressions dans le circuit anodique et dans le circuit cathodique valant $P_2$ avec $P_2$ pratiquement identique à $P_1$.

Ainsi, on voit que l'on peut mettre en oeuvre une procédure de détection de l'état d'une pile à combustible dans laquelle on relève l'évolution au cours du temps de ladite fonction mathématique, ici la somme algébrique, et on déclenche une alarme lorsque le couple de valeurs constitué par le temps et la valeur de la fonction associée audit temps franchit un seuil prédéterminé. La variation de pression dans lesdits circuits pendant une période de temps prédéterminée $t_c$ est mesurée, et une fonction mathématique combinant les valeurs de la pression dans lesdits circuits est calculée ; une alerte est alors donnée lorsque la fonction est inférieure à un seuil d'alerte au bout d'une période de temps prédéterminée.

En pratique, pour une pile à combustible de type PEFC présentant une surface active totale cumulée de l'ordre de 5000cm2, un volume des circuits anodiques et cathodique de l'ordre de 1 litre et un différentiel de pression moyen par rapport à l'atmosphère au terme de l'extinction d'environ 500mbar, des observations expérimentales donnent les règles de bonne pratique suivantes : un seuil d'alerte est à activer lorsque la somme des pressions anode et cathode descend de 240mbar en 3 minutes à une température de 70°C; au-delà, on peut fixer un seuil d'arrêt lorsque la somme des pressions anode et cathode descend de 300mbar en 3 minutes à une température de 70°C. Lorsque le niveau de seuil d'arrêt est atteint, le fonctionnement de la pile est interdit (par exemple par un programme en unité centrale de pilotage) et une action de maintenance est rendue obligatoire. Les joints présents à de nombreux endroits dans une pile à combustible sont souvent la cause de défauts d'étanchéité. Pour identifier l'origine de la fuite lors de l'opération de maintenance, une méthode consiste à pressuriser la pile avec un gaz neutre, de l'azote de préférence, à une pression proche de la pression nominale de fonctionnement, puis à pulvériser un produit moussant couramment utilisé pour la détection de fuites sur l'extérieur de la pile pour localiser l'origine de la fuite.

En ce qui concerne la nature des gaz et la pression, la procédure d'arrêt décrite plus haut procure de bonnes conditions et permet une très bonne répétabilité, à savoir hydrogène pur à l'anode à une pression de 500mbara et azote pur à la cathode à une pression de 2.2 bara. Il faut en effet garantir que les gaz en présence ne permettent pas d'activité électrochimique, ce qui rendrait inopérable la mesure de l'état de la pile par variation de pression. Il est également bien entendu que les circuits anodiques et cathodiques doivent être fermés pendant la mesure de façon à ce qu'il n'y ait pas d'échange de gaz avec le milieu ambiant ou avec les réservoirs ce qui fausserait complètement la mesure de l'état de la pile. Ceci signifie que les vannes 128, 122, 120, 127, 118, 110 et 117 doivent être fermées.

Il est évident que la pression des gaz dans les circuits anode et cathode doit être différente de la pression atmosphérique, faute de quoi, il ne sera pas possible d'observer de variation de pression due à des fuites vis à vis de l'atmosphère. Si la pression interne est inférieure à la pression atmosphérique, une fuite dans le circuit concerné se traduira par une élévation de pression, et inversement.

. En outre les pompes de recirculation 115 et 125 ainsi que la pompe de gavage 129 doivent être arrêtées de façon à ne pas perturber la mesure.

## Revendications

1. Procédure de détection de l'état d'une pile à combustible, la pile à combustible (1) étant formée par un empilage de cellules électrochimiques ayant chacune une anode et une cathode de part et d'autre d'une membrane polymère échangeuse d'ion, la pile à combustible ayant un système d'alimentation en gaz carburant côté anode des cellules électrochimiques et un système d'alimentation en gaz comburant côté cathode des cellules électrochimiques, la procédure consistant à, lors de chaque arrêt de la pile à combustible, relever l'évolution d'une fonction mathématique représentant la moyenne de la pression dans le circuit cathodique et de la pression dans le circuit anodique, et activer un signal d'alerte indiquant que la pile à combustible nécessite une inspection lorsque le couple de valeurs constitué par le temps qui s'écoule après que la pile à combustible soit considérée comme éteinte et la valeur de la fonction mathématique combinant la pression dans le circuit cathodique et de la pression dans le circuit anodique associé audit temps franchit un seuil prédéterminé.

2. Procédure de détection de l'état d'une pile à combustible selon la revendication précédente dans laquelle la variation de pression dans lesdits circuits pendant une période de temps prédéterminée $t_c$ est mesurée, une fonction mathématique combinant les valeurs de la pression dans lesdits circuits est calculée et une alerte est donnée lorsque la fonction est inférieure à un seuil d'alerte au bout d'une période de temps prédéterminée.

3.  Procédure de détection de l'état d'étanchéité d'une pile à combustible selon l'une des revendications précédentes, précédée d'une procédure d'arrêt de ladite pile à combustible (1), ladite pile à combustible délivrant une tension électrique sur une ligne électrique de puissance (10), la procédure d'arrêt comprenant les actions suivantes :

    • (i) coupure de l'alimentation en gaz carburant et en gaz comburant, et
    • (ii) maintien d'un prélèvement de courant tant qu'un révélateur approprié indique que le gaz comburant dans le système d'alimentation en gaz comburant n'est pas suffisamment consommé ;
    • (iii) injection de gaz enrichi en azote dans le système d'alimentation en gaz comburant.

4.  Procédure de détection de l'état d'étanchéité d'une pile à combustible selon l'une des revendications précédentes, pour pile à combustible comportant un système d'alimentation en gaz comburant côté cathode des cellules électrochimiques, le système d'alimentation en gaz comburant comportant à la fois une vanne de coupure (120) disposée à la sortie d'un réservoir de stockage (12T) pour l'oxygène et un dispositif de remplissage en air atmosphérique pressurisé et un circuit de recyclage (12R) branché à la sortie du circuit cathodique de la pile à combustible 1, avec un séparateur d'eau (124) avant un retour et un branchement sur la canalisation d'alimentation en gaz comburant.

5.  Procédure de détection de l'état d'étanchéité d'une pile à combustible, selon la revendication 3, dans laquelle les actions (i), (ii) et (iii) sont concomitantes.

6.  Procédure de détection de l'état d'étanchéité d'une pile à combustible, selon la revendication 3, dans laquelle les actions (ii) et (iii) sont des étapes successives, les deux actions (i) et (ii) étant concomitantes.

7.  Procédure de détection de l'état d'étanchéité d'une pile à combustible, selon la revendication 3, comportant en outre, après l'action (iii), une étape d'aspiration de gaz carburant.

8.  Procédure de détection de l'état d'étanchéité d'une pile à combustible, selon la revendication 3, pour pile à combustible alimentée en oxygène pur comme comburant, le gaz enrichi en azote étant l'air atmosphérique.

9.  Procédure de détection de l'état d'étanchéité d'une pile à combustible, selon la revendication 3, dans laquelle l'action d'interruption de l'alimentation en gaz carburant est différée par rapport à l'action d'interruption de l'alimentation en gaz comburant.

10.  Procédure de détection de l'état d'étanchéité d'une pile à combustible, selon la revendication 3, dans laquelle l'alimentation en gaz comburant et en gaz carburant sont interrompues simultanément.

11.  Procédure de détection de l'état d'étanchéité d'une pile à combustible, selon la revendication 3, dans laquelle le prélèvement de courant est d'abord établi à un premier niveau puis il est réduit en même temps que certaines cellules de la pile à combustible commencent à descendre en tension et s'annule finalement lorsque la tension de la pile à combustible approche de 0V.

**Patentansprüche**

1.  Verfahren zur Erfassung des Zustands einer Brennstoffzelle, wobei die Brennstoffzelle (1) aus einer Aufschichtung elektrochemischer Einzelzellen gebildet ist, welche jeweils eine Anode und eine Kathode beiderseits einer Ionenaustauschmembran aus Polymer aufweisen, wobei die Brennstoffzelle auf der Anodenseite der elektrochemischen Einzelzellen ein System zur Versorgung mit einem gasförmigen Brennstoff und auf der Kathodenseite der elektrochemischen Einzelzellen ein System zur Versorgung mit einer gasförmigen Sauerstoffquelle aufweist, wobei das Verfahren darin besteht, bei jeder Abschaltung der Brennstoffzelle den Verlauf einer mathematischen Funktion zu erfassen, welche den Mittelwert des Drucks im Kathodenkreislauf und des Drucks im Anodenkreislauf wiedergibt, und immer dann ein Alarmsignal auszulösen, welches anzeigt, dass die Brennstoffzelle eine Überprüfung benötigt, wenn das Wertepaar, welches aus der Zeit, die verstrichen ist, seitdem die Brennstoffzelle als ausgeschaltet anzusehen ist, besteht sowie aus dem Wert der mathematischen Funktion, die eine Kombination des Drucks im Kathodenkreislauf und des Drucks im Anodenkreislauf in Verbindung mit dieser Zeit darstellt, einen vorbestimmten Schwellenwert erreicht.

2.  Verfahren zur Erfassung des Zustands einer Brennstoffzelle nach dem vorhergehenden Anspruch, wobei die Druckänderung in den Kreisläufen während eines vorbestimmten Zeitraums $t_c$ gemessen wird, eine mathematische Funktion, welche eine Kombination der Werte des Drucks in den Kreisläufen darstellt, berechnet wird und immer dann ein Alarm gegeben wird, wenn die Funktion nach Ablauf eines vorbestimmten Zeitraums geringer als ein Alarmschwellenwert ist.

**3.** Verfahren zur Erfassung des Dichtigkeitszustands einer Brennstoffzelle nach einem der vorhergehenden Ansprüche, welchem ein Verfahren zum Abschalten der Brennstoffzelle (1) vorangeht, wobei die Brennstoffzelle eine Leistungsstromleitung (10) mit einer elektrischen Spannung versorgt, wobei das Abschaltverfahren die folgenden Tätigkeiten umfasst:

> • (i) Unterbrechen der Zufuhr an gasförmigem Brennstoff und an gasförmiger Sauerstoffquelle, und
> • (ii) Aufrechterhalten einer Stromabnahme, solange eine geeignete Detektionsvorrichtung anzeigt, dass die gasförmige Sauerstoffquelle im System zur Versorgung mit einer gasförmigen Sauerstoffquelle nicht hinreichend verbraucht ist;
> • (iii) Einleiten von an Stickstoff angereichertem Gas in das System zur Versorgung mit einer gasförmigen Sauerstoffquelle.

**4.** Verfahren zur Erfassung des Dichtigkeitszustands einer Brennstoffzelle nach einem der vorhergehenden Ansprüche, für eine Brennstoffzelle, die auf der Kathodenseite der elektrochemischen Einzelzellen ein System zur Versorgung mit einer gasförmigen Sauerstoffquelle aufweist, wobei das System zur Versorgung mit einer gasförmigen Sauerstoffquelle sowohl ein Sperrventil (120) aufweist, das an der Austrittsöffnung eines Behälters zur Lagerung (12T) von Sauerstoff angeordnet ist, als auch eine Vorrichtung zum Befüllen mit unter Druck gesetzter Umgebungsluft und einen Rückführungskreislauf (12R), der an die Austrittsöffnung des Kathodenkreislaufes der Brennstoffzelle 1 angeschlossen ist, mit einem Wasserabscheider (124), der einem Rücklauf vorgeschaltet ist, und einem Anschluss an die Rohrleitung zur Versorgung mit einer gasförmigen Sauerstoffquelle.

**5.** Verfahren zur Erfassung des Dichtigkeitszustands einer Brennstoffzelle nach Anspruch 3, wobei die Tätigkeiten (i), (ii) und (iii) gleichzeitig erfolgen.

**6.** Verfahren zur Erfassung des Dichtigkeitszustands einer Brennstoffzelle nach Anspruch 3, wobei die Tätigkeiten (ii) und (iii) aufeinanderfolgende Schritte darstellen, wobei die Tätigkeiten (i) und (ii) gleichzeitig erfolgen.

**7.** Verfahren zur Erfassung des Dichtigkeitszustands einer Brennstoffzelle nach Anspruch 3, wobei dieses darüber hinaus, nach der Tätigkeit (iii), einen Schritt des Absaugens des gasförmigen Brennstoffs umfasst.

**8.** Verfahren zur Erfassung des Dichtigkeitszustands einer Brennstoffzelle nach Anspruch 3, für eine Brennstoffzelle, die mit reinem Sauerstoff als gasförmiger Sauerstoffquelle versorgt wird, wobei es sich bei dem an Stickstoff angereicherten Gas um Umgebungsluft handelt.

**9.** Verfahren zur Erfassung des Dichtigkeitszustands einer Brennstoffzelle nach Anspruch 3, wobei die Tätigkeit des Unterbrechens der Versorgung mit gasförmigem Brennstoff gegenüber der Tätigkeit des Unterbrechens der Versorgung mit einer gasförmigen Sauerstoffquelle zeitversetzt erfolgt.

**10.** Verfahren zur Erfassung des Dichtigkeitszustands einer Brennstoffzelle nach Anspruch 3, wobei die Unterbrechung der Versorgung mit einer gasförmigen Sauerstoffquelle und mit gasförmigem Brennstoff gleichzeitig erfolgt.

**11.** Verfahren zur Erfassung des Dichtigkeitszustands einer Brennstoffzelle nach Anspruch 3, wobei die Stromabnahme zunächst in einem ersten Umfang erfolgt, woraufhin sie zum gleichen Zeitpunkt verringert wird, zu welchem bestimmte Einzelzellen der Brennstoffzelle beginnen, einen Spannungsabfall zu zeigen, und schließlich vollständig auf null sinkt, wenn die Spannung der Brennstoffzelle sich 0 V annähert.

**Claims**

**1.** Procedure for detecting the state of a fuel cell, the fuel cell (1) being formed by a stack of electrochemical cells each having an anode and a cathode on either side of an ion-exchanging polymer membrane, the fuel cell having a fuel gas supply system on the anode side of the electrochemical cells and an oxidizing gas supply system on the cathode side of the electrochemical cells, the procedure consisting in, each time the fuel cell is stopped, recording the trend of a mathematical function representing the average of the pressure in the cathode circuit and the pressure in the anode circuit, and activating an alert signal indicating that the fuel cell requires an inspection when the pair of values consisting of the time which elapses after the fuel cell is considered to be off and the value of the mathematical function combining the pressure in the cathode circuit and the pressure in the anode circuit associated with said time crosses a predetermined threshold.

**2.** Procedure for detecting the state of a fuel cell according to the preceding claim, in which the pressure variation in said circuits during a predetermined time period $t_c$ is measured, a mathematical function combining the values of the pressure in said circuits is calculated and an alert is given when the function is below an alert threshold at the end of a predetermined time period.

3. Procedure for detecting the sealed state of a fuel cell according to one of the preceding claims, preceded by a procedure to stop said fuel cell (1), said fuel cell delivering an electric voltage on an electrical power line (10), the stopping procedure comprising the following actions:

  • (i) cutting off the supply of fuel gas and oxidizing gas, and
  • (ii) maintaining a drawing of current as long as an appropriate telltale indicates that the oxidizing gas in the oxidizing gas supply system is not sufficiently consumed;
  • (iii) injecting nitrogen-enriched gas into the oxidizing gas supply system.

4. Procedure for detecting the sealed state of a fuel cell according to one of the preceding claims, for a fuel cell comprising an oxidizing gas supply system on the cathode side of the electrochemical cells, the oxidizing gas supply system comprising both a cut-off valve (120) arranged at the outlet of a storage tank (12T) for the oxygen and a pressurized atmospheric air filling device and a recycling circuit (12R) connected to the outlet of the cathode circuit of the fuel cell 1, with a water separator (124) before a return and a connection to the oxidizing gas supply line.

5. Procedure for detecting the sealed state of a fuel cell, according to Claim 3, in which the actions (i), (ii) and (iii) are concomitant.

6. Procedure for detecting the sealed state of a fuel cell, according to Claim 3,
in which the actions (ii) and (iii) are successive steps, the two actions (i) and (ii) being concomitant.

7. Procedure for detecting the sealed state of a fuel cell, according to Claim 3, further comprising, after the action (iii), a fuel gas suction step.

8. Procedure for detecting the sealed state of a fuel cell, according to Claim 3, for the fuel cell supplied with pure oxygen as fuel, the nitrogen-enriched gas being atmospheric air.

9. Procedure for detecting the sealed state of a fuel cell, according to Claim 3, in which the action of interrupting the fuel gas supply is deferred relative to the action of interrupting the oxidizing gas supply.

10. Procedure for detecting the sealed state of a fuel cell, according to Claim 3, in which the oxidizing gas and fuel gas supply are interrupted simultaneously.

11. Procedure for detecting the sealed state of a fuel cell, according to Claim 3, in which the drawing of current is first established at a first level and then is reduced at the same time as certain cells of the fuel cell commence lowering the voltage and is cancelled finally when the voltage of the fuel cell approaches 0V.

EP 2 494 643 B1

Fig. 1

11

**Fig. 2**

**Fig. 3**

**EP 2 494 643 B1**

## RÉFÉRENCES CITÉES DANS LA DESCRIPTION

**Documents brevets cités dans la description**

- WO 2003061046 A
- JP 2009146651 A